Europäisches Patentamt

European Patent Office

Office européen des brevets

(11) Numéro de publication: **0 216 975**
A1

(12) **DEMANDE DE BREVET EUROPEEN**

(21) Numéro de dépôt: 85401880.1

(22) Date de dépôt: 26.09.85

(51) Int. Cl.⁴: **B65D 5/56** , B65D 5/44 ,
B32B 27/10

(43) Date de publication de la demande:
08.04.87 Bulletin 87/15

(84) Etats contractants désignés:
**AT BE CH DE FR GB IT LI LU NL**

(71) Demandeur: **Société Anonyme dite :
LOCAGRAF**

**F-02580 Etreaupont(FR)**

(72) Inventeur: **Gervais, Roger
1, place de L'Eglise
F-02580 Etreaupont(FR)**
Inventeur: **Noulet, José
26, allée des Bouleaux
F-08000 Charleville Mézières(FR)**

(74) Mandataire: **Hasenrader, Hubert et al
Cabinet BEAU DE LOMENIE 55, rue
d'Amsterdam
F-75008 Paris(FR)**

(54) Matériau composite pour emballage et emballage réalisé dans ce matériau.

㊼ Le matériau composite est constitué d'une feuille de carton contrecollée au moins sur une face avec une feuille de polypropyène profilé en caissons.

L'emballage comporte un doublage intérieur supplémentaire fait de deux plaques collées (14,15) sur deux faces (7,8) opposées de l'emballage (6), et ménageant deux glissières (16,17) d'introduction de deux autres plaques de doublage intérieur des deux autres faces (9,10).

L'emballage comporte en plus des arêtes pliables entre ces faces latérales (7,9;8,10), au moins deux lignes de pliage (18,19) supplémentaires, parallèles auxdites arêtes, et pratiquées dans les deux faces (9,10) latérales opposées dépourvues de plaques collées (14,15).

FIG 2

### Matériau composite pour emballage et emballage réalisé dans ce matériau.

L'invention concerne le domaine des emballages à base de carton.

Les emballages parallélépipédiques classiques en carton ondulé souffrent d'un certain nombre d'inconvénients parmi lesquels on compte : une résistance souvent insuffisante aux charges, notamment quand les emballages doivent être manipulés et empilés ; une grande fragilité vis-à-vis des déchirures, perforations, etc., causées par des chocs, etc. ; une protection thermique insuffisante. Les deux premiers inconvénients sont considérablement aggravés par l'eau ou l'humidité ambiante qui peuvent entraîner une détérioration complète des emballages.

Le but de l'invention est de proposer un nouveau matériau, à base de carton, pour la réalisation des emballages qui, tout en restant économique, pallie les inconvénients précités.

L'invention atteint son but en proposant un matériau composite constitué d'une feuille de carton (généralement ondulé) contrecollée sur au moins une face avec une feuille de polypropylène profilée en caissons contigus ou renforcements analogues. Il est généralement avantageux que les directions de renforcement des feuilles contrecollées (cannelures pour l'une, caissons pour l'autre) soient croisées. Ainsi le matériau composite offre-t-il une rigidité satisfaisante dans toutes les directions.

Selon l'environnement auquel est destiné l'emballage, on choisira de placer la face en polypropylène à l'extérieur et/ou à l'intérieur de l'emballage, la face en polypropylène étant naturellement la plus résistante aux chocs, et inaltérable par l'eau ou l'humidité.

Le matériau composite de l'invention se prête particulièrement bien à la fabrication traditionnelle d'emballages parallélépipédiques à partir d'ébauches développées planes formant les faces latérales et les rabats de fond et de couverture de l'emballage. Si l'emballage doit être étanche, il est nécessaire que les jonctions (au niveau des rabats, des agrafages de faces, etc.) soient rendues étanches, par exemple par des adhésifs appropriés.

Lorsque l'emballage est destiné à être parfaitement isotherme (bien que les caissons de polyéthylène assument partiellement un tel role), et/ou lorsqu'il est destiné au gerbage, on peut prévoir un doublage intérieur additionnel isolant thermiquement et/ou résistant structurellement. Selon une caractéristique originale de l'invertion, ce doublage est conçu de manière a être rapidement et correctement monté, tout en conservant les avantages du pliage à plat pour l'expédition et/ou le stockage.

Selon l'invention le doublage intérieur comporte au moins deux plaques collées à l'avance sur deux faces latérales opposées -de préférence les grandes faces-de l'emballage. Ces plaques collées ménagent deux glissières pour l'introduction de deux autres plaques de doublage intérieur destinées à couvrir les deux autres faces. Cette disposition assure la rapidité et la conformité du montage. On peut prévoir -notamment pour assurer l'isothermie de l'emballage-une plaque de fond et une plaque de couverture.

Afin que, malgré ces plaques collées, on puisse plier l'emballage à plat sans difficulté, celui-ci comporte, en plus des lignes de pliage souple formées aux arêtes entre les faces latérales, au moins deux lignes de pliage souple supplémentaire, parallèles auxdites arêtes, et pratiquées dans les deux faces latérales opposées dépourvues de plaques collées.

Selon un autre mode de réalisation de l'invention destiné à la fabrication d'emballages parfaitement isothermes, on utilise un matériau composite du type précité, auquel on ajoute une feuille d'aluminium mince contrecollée sur la feuille de polypropylène profilé en caissons. Les emballages réalisés avec ce composite triple présentent la face aluminium du côté intérieur de l'emballage. La feuille d'aluminium sert de réflecteur thermique et l'isothermie obtenue est excellente : cette solution présente sur la précédente l'avantage d'un gain de volume intérieur et d'un poids mort particulièrement réduit. Dans certains cas, on peut recouvrir la feuille d'aluminium d'une feuille de protection de polyéthylène.

Le matériau composite de l'invention et les emballages réalisés avec celui-ci donnent toute satisfaction dans les utilisations traditionnelles, et offrent une très grande résistance.

Cependant, il est des applications particulières (transport d'explosifs, de produits dangereux, etc.) qui exigent une sécurité accrue. Pour ces applications, il est avantageux d'employer un matériau composite du type conforme à l'invention, auquel on ajoute un grillage de blindage entre le carton et la feuille de polypropylène. Le grillage est de préférence une fine étamine de métal tissé (par exemple de titane). Il est introduit entre le carton et le polypropylène au moment de leur contrecollage. On emploie à cet effet une colle assez épaisse pour assurer un bon collage malgré l'épaisseur du grillage : il faut toutefois noter que le grillage s'enfonce en partie dans le carton lors du contrecollage, et qu'un décollement ultérieur local du composite est sans conséquence sur la tenue de l'emballage.

Ce type de composite assure la sécurité de l'emballage aussi bien d'une manière interne (le produit emballé ne risque pas de s'échapper) qu'externe (le grillage assure une meilleure protection contre les vols dans les entrepôts, etc.). Cette sécurité est acquise au prix d'une augmentation de poids minime.

Il est possible d'ôter localement une petite surface de carton de manière à former une fenêtre d'éclairement de l'emballage. On peut aussi ôter simultanément une petite surface de polypropylène, afin de réaliser une fenêtre grillagée permettant l'aération du contenu de l'emballage.

Dans le cas où cet emballage sert au transport de produits, notamment liquides, pouvant eux-mêmes s'échapper de leur emballage primaire, on peut prévoir au fond de l'emballage un bac de rétention.

Un emballage conçu intégralement selon les directives de l'invention présente les avantages suivants :

-excellente résistance à l'humidité,

-excellente résistance à l'éclatement et aux déchirures,

-excellente résistance à l'écrasement au gerbage,

-excellente résistance aux déperditions thermique,

-facilité et perfection de montage,

-possibilité de réutilisation,

-possibilité de récupération par décollage des matériaux de base (carton et polypropylène), alors que les emballages composites connus (cartons paraffinés ou bitumés) exigent l'incinération.

L'invention sera mieux comprise grâce à la description suivante faite en référence aux dessins annexés sur lesquels :

-la figure 1 représente en perspective un matériau composite conforme à l'invention,

-la figure 2 représente en perspective un exemple préféré d'emballage réalisé avec le matériau de la figure 1,

-la figure 3 représente, en vue de dessus, un emballage du type de celui de la figure 2, à l'état plié conformément à l'invention.

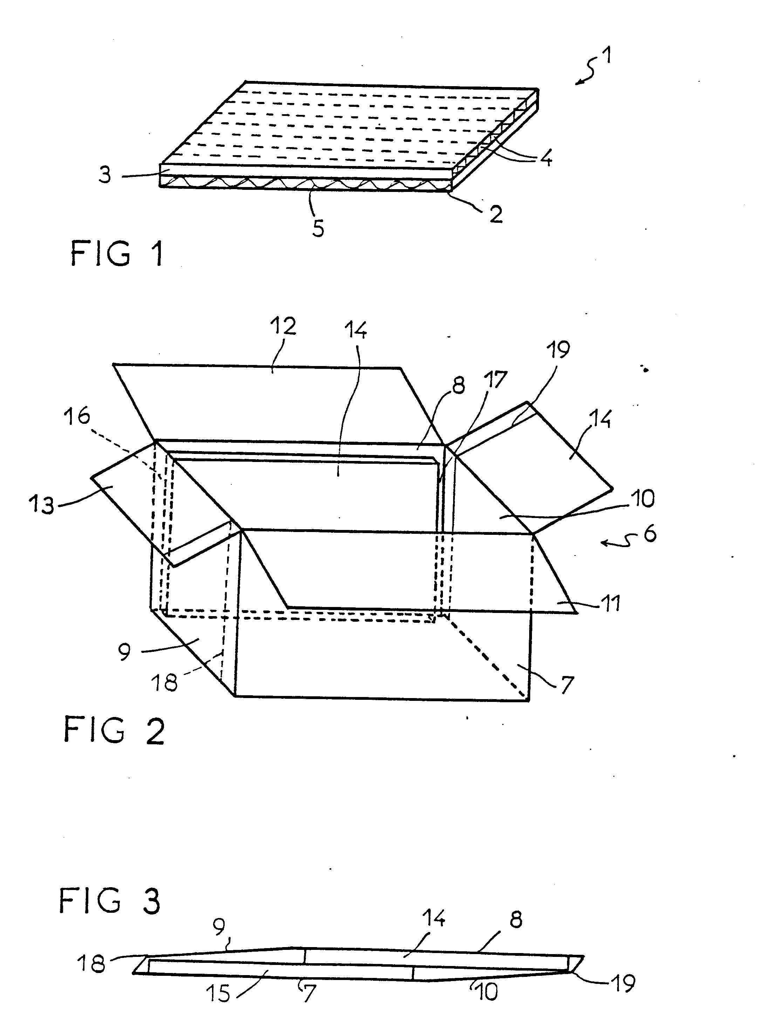

La figure 1 montre le matériau composite 1 constitué d'une feuille de carton 2 de quelques millimètres (2 ou 3) contrecollée sur une face à une feuille 3 de polypropylène (d'environ 2 ou 3mm) profilée en caissons creux 4 obtenus avantageusement par extrusion. La feuille de carton 2 est avantageusement en carton ondulé, constitué d'un papier cannelé contrecollé sur ses deux faces avec un papier de couverture. Pour donner au composite 1 la meilleure rigidité dans toutes les directions, il est avantageux que les cannelures 5 soient perpendiculaires aux caissons 4.

Selon les variantes de réalisation mentionnées plus haut, on interpose un grillage entre les feuilles 2 et 3, et/ou on contrecolle une feuille d'aluminium sur la face libre de la feuille 3 de polypropylène.

La figure 2 montre un emballage parallélépipédique 6 constitué comme il est connu à partir d'une ébauche plane. L'ébauche est en matériau composite conforme à l'invention. Selon les utilisations, la feuille de polyproplène peut être à l'intérieur, à l'extérieur ou les deux à la foix, voire même, quoique ce ne soit pas spécialement avantageux, en sandwich entre deux feuilles de carton. L'emballage comporte quatre faces rectangulaires latérales : deux grandes faces opposées 7,8 et deux petites faces opposées 9,10. Les faces comportent des rabats supérieurs 11,12,13,14 et des rabats inférieurs (non représentés) destinés à former respectivement le couvercle et le fond de l'emballage 6. Les faces sont attenantes dans l'ébauche. A l'état construit, il est nécessaire de raccorder le bord de la première face au bord de la quatrième face : ce raccord doit être suffisamment étanche si l'on veut profiter de l'étanchéité du polypropylène.

Selon un aspect particulièrement avantageux de l'invention, on double intérieurement l'emballage 6 par un matériau très isolant, tel que le polystyrène expansé. A cette fin on colle, au moment de la fabrication de l'ébauche, sur deux faces opposées, par exemple les grandes faces 7 et 8, deux plaques de polystyrène expansé épais 14 et 15 (la plaque 15 n'est pas représentée sur la figure 2). Ces plaques sont dimensionnées de manière à laisser de chaque côté deux espaces 16,17 très légèrement supérieurs à l'épaisseur du doublage : ces espaces associés à leur vis-à-vis servent de glissière pour enfoncer les deux plaques de polystyrène qui viendront couvrir les faces 9 et 10. Quand les quatre faces de doublage sont mises en place, on peut facilement mettre une plaque de fond, puis, après remplissage, une plaque de couvercle (à cette fin les plaques latérales ne vont pas tout à fait jusqu'en haut des faces de l'emballage).

Afin de pouvoir néanmoins livrer les emballages 6 à l'état plié (fig. 3), il est prévu sur les faces 9, 10 qui ne portent pas les plaques de doublage collées 14, 15, (lesquelles peuvent atteindre 25 à 40 mm d'épaisseur), une ligne de prépliage 18, 19, se prolongeant sur les rabats supérieurs 13, 14 et inférieurs. Ces lignes de prépliage 18, 19 sont prévues près des arêtes entre les faces 7, 9 et 8, 10, à une distance des arêtes de l'ordre de l'épaisseur des plaques 14, 15 de manière à permettre un pliage conforme à la figure 3. Ces lignes de prépliage 18, 19 ne sont pas nécessaires dans les deux feuilles du matériau composite, mais le sont au moins dans la (ou les feuilles) dont la direction de renforcement est perpendiculaire aux arêtes entre les faces latérales.

Ainsi, selon l'invention, les emballages 6 peuvent s'expédier et se stocker facilement à plat (état de la figure 3) ; ils se montent ensuite instantanément en repliant les rabats inférieurs, en glissant les deux faces de doublage restantes, puis le fond de doublage, ce qui a pour effet de bloquer l'emballage dans son état monté.

Au lieu de glisser directement les deux faces de doublage dans les glissières 16, 17, ces dernières peuvent servir de logement à un jeu de quatre clefs de blocage contiguës aux arêtes et comportant elles-mêmes un profil de retenue des plaques de doublage. Le matériau constituant les clefs est choisi en fonction du rôle isolant et/ou structurel de la clef : ce peut être du polystyrène, du bois, etc... Leur section peut être prévue de manière qu'elles servent de chandelles.

L'emballage réalisé conformément à l'invention par pliage du matériau composite est notamment isotherme en raison du matelas d'air immobilisé dans les caissons du polypropylène par les lignes de pliage (perpendiculaires auxdits caissons).

Selon une autre variante de l'invention, on peut remplacer la feuille d'aluminium contrecollée sur la face libre de la feuille de polypropylène, par une feuille d'un autre métal pour des applications spécifiques : en particulier par une feuille de plomb (éventuellement sur support papier) pour obtenir une caisse de blindage contre certains rayonnements.

**Revendications**

1. Matériau composite (1) à base de carton pour emballages, caractérisé en ce qu'il est constitué d'une feuille de carton (2) contrecollée au moins sur une face avec une feuille (3) de polypropylène profilé en caissons.

2. Matériau selon la revendication 1, caractérisé en ce qu'une feuille d'aluminium est contrecollée sur la face libre de la feuille (3) de polypropylène profilé en caisson.

3. Matériau selon la revendication 1, caractérisé en ce qu'une feuille de plomb est contrecollée sur la face libre de la feuille (3) de polypropylène profilé en caisson.

4. Matériau selon l'une quelconque des revendications 1 à 3, caractérisé en ce qu'un grillage de blindage est interposé entre les feuilles (2) de carton et (3) de polypropylène.

5. Emballage (6) à base de carton, caractérisé en ce qu'il est constitué du matériau (1) selon l'une quelconque des revendications 1 à 4.

6. Emballage selon la revendication 5, de forme parallélépipédique, constitué par quatre faces latérales (7-10) et des rabats (11-14) formant le fond et le couvercle de l'emballage, caractérisé en ce qu'il comporte un doublage intérieur supplémentaire (14, 15).

7. Emballage selon la revendication 6, caractérisé en ce que le doublage intérieur (14, 15) comporte au moins deux plaques collées (14, 15) sur deux faces (7, 8) opposées de l'emballage (6)

8. Emballage selon la revendication 7, les deux plaques collées (14, 15) ménagent deux glissières - (16, 17) d'introduction de deux autres plaques de doublage intérieur des deux autres faces (9, 10).

9. Emballage selon l'une quelconque des revendications 7 ou 8, caractérisé en ce qu'il comporte en plus des arêtes pliables entre ces faces latérales (7, 9 ; 8, 10), au moins deux lignes de pliage (18, 19) supplémentaires, parallèles auxdites arêtes, et pratiquées dans les deux faces (9, 10) latérales opposées dépourvues de plaques collées (14, 15).

FIG 1

FIG 2

FIG 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 561 583  (CARTONNERIE NOREMBAL) <br> * En entier * | 1-9 | B 65 D    5/56 <br> B 65 D    5/44 <br> B 32 B   27/10 |
| | --- | | |
| A | EP-A-0 070 721  (EXXON RESEARCH AND ENGINEERING) <br> * Revendications 1,6; page 4, ligne 12 - page 6, ligne 10; page 8, ligne 1 - page 11, ligne 35; figures 1-5 * | 1,5,6 | |
| | --- | | |
| A | EP-A-0 108 537  (TRI-ENGLE SYSTEMS) <br> * Revendications 1-3,7; page 6, ligne 7 - page 11, ligne 3; page 13, ligne 7 - page 16, ligne 13; page 21, lignes 22-29; figures 1-7,12-15 * | 1,2,5, 6 | |
| | | | **DOMAINES TECHNIQUES RECHERCHES (Int. Cl.4)** |
| | --- | | |
| A | EP-A-0 038 022  (MOFLEPAN) <br> * Revendications 1-3; page 2, ligne 18 - page 4, ligne 22; page 5, lignes 23-27; exemple 1 * | 1,2 | B 65 D <br> B 32 B |
| | --- | | |
| A | EP-A-0 132 191  (DUPUY ENGINEERING) <br> * Revendications 1,2,4; page 3, ligne 4 - page 4, ligne 9; figure 1 * | 6,7 | |
| | ---            -/- | | |

| Le présent rapport de recherche a été établi pour toutes les revendications | | |
|---|---|---|
| Lieu de la recherche <br> LA HAYE | Date d'achèvement de la recherche <br> 28-05-1986 | Examinateur <br> BLASBAND I. |

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 663 486 (W. GEISLER) <br> * Revendication 1; colonne 1, ligne 18 - colonne 2, ligne 44; colonne 3, ligne 69 - colonne 4, ligne 6; figure 4 * <br> ----- | 9 | |

**DOCUMENTS CONSIDERES COMME PERTINENTS**  Page 2

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 28-05-1986 | BLASBAND I. |